# EUROPÄISCHE PATENTSCHRIFT

(11) **EP 3 245 856 B1**
(45) Veröffentlichungstag und Bekanntmachung des Hinweises auf die Patenterteilung: **20.11.2019**
(21) Anmeldenummer: 17174975.7
(22) Anmeldetag: 22.05.2015
(51) Int. Cl.: A01B 63/10

(54) **ANORDNUNG ZUR KONTROLLE EINER GERÄTESCHNITTSTELLE EINES LANDWIRTSCHAFTLICHEN ARBEITSFAHRZEUGS**
ASSEMBLY FOR CONTROLLING A DEVICE INTERFACE OF AN AGRICULTURAL WORK VEHICLE
SYSTÈME DE CONTRÔLE D'UNE INTERFACE D'APPAREIL D'UN ENGIN AGRICOLE

(30) Priorität: 18.06.2014 DE 102014211712
(43) Veröffentlichungstag der Anmeldung: 22.11.2017
(62) Teilanmeldung aus: 15168804.1
(73) Patentinhaber: Deere & Company, Moline, IL 61265 (US)
(72) Erfinder: Kremmer, Martin, 68163 Mannheim (DE); Reinards, Marco, 68163 Mannheim (DE)
(74) Vertreter: Holst, Sönke

(56) Entgegenhaltungen:
- EP-A1- 1 852 007
- DE-A1- 10 217 398
- DE-U1-202012 006 899

## Beschreibung

Die Erfindung betrifft ein landwirtschaftliches Arbeitsfahrzeug mit einer Geräteschnittstelle und einer Anordnung zur fernbedienten Kontrolle der Geräteschnittstelle gemäß dem Oberbegriff des Anspruchs 1.

### Stand der Technik

In der Landwirtschaft werden Arbeitsfahrzeuge, insbesondere Schlepper, für unterschiedliche Aufgaben verwendet, beispielsweise für die Bodenbearbeitung, zum Ausbringen von Material, wie Saatgut oder Dünger, auf einem Feld, für Erntearbeiten oder für Transportarbeiten. Demnach sind unterschiedliche Geräte an das Arbeitsfahrzeug anzukoppeln, wie Pflüge, Sämaschinen, Düngerstreuer, Ballenpressen, Mähgeräte, angebaute Feldhäcksler oder Transportanhänger. Die Arbeitsfahrzeuge sind daher mit einer oder mehreren Schnittstellen ausgestattet, an denen unterschiedliche Geräte befestigt werden können. Derartige Schnittstellen können eine Anhängekupplung zum Anhängen z.B. eines Transportanhängers oder einer Ballenpresse, eine hintere Dreipunktkupplung an der Rückseite des Arbeitsfahrzeugs und/oder eine Dreipunktkupplung an der Vorderseite des Arbeitsfahrzeugs umfassen, die jeweils zur Anbringung nicht mit einer Deichsel angekoppelter Geräte dienen, z.B. von Mähgeräten, Feldhäckslern, Düngerstreuern, Sämaschinen oder Pflügen.

Beim Anbau der Geräte ist zunächst das Arbeitsfahrzeug in eine geeignete Stellung gegenüber dem Gerät zu fahren. Anschließend sind die Kupplungen derart zu verstellen, dass Verbindungselemente zwischen dem Arbeitsfahrzeug und dem Gerät geschlossen werden können. Schließlich erfolgt dann das Schließen der Verbindungselemente, um eine temporäre Ankopplung des Geräts an das Arbeitsfahrzeug zu bewerkstelligen. Diese Schritte erfolgen im Stand der Technik von einem Bedienerarbeitsplatz des Arbeitsfahrzeugs aus. Der Bediener fährt demnach zunächst das Arbeitsfahrzeug an eine geeignete Stelle in der Nähe des Geräts und verstellt dann die Kupplung gegenüber dem Arbeitsfahrzeug, indem er am Bedienerarbeitsplatz angeordnete Eingabeelemente zur Ansteuerung von fremdkraftbetätigten Aktoren zur Verstellung der Kupplung betätigt. Schließlich erfolgt dann die Verriegelung des Geräts an der Kupplung, was entweder ferngesteuert vom Bedienerarbeitsplatz oder direkt an Ort und Stelle durch manuelles Einwirken des Bedieners erfolgt. Dabei ist es für den Bediener nicht einfach, die korrekte Position der Kupplung gegenüber dem Gerät von seinem Bedienerarbeitsplatz aus zu erzielen, insbesondere wenn keine direkte Sicht möglich ist, wie bei frontseitigen Dreipunktkupplungen. Der Bediener muss somit öfter von seinem Bedienerarbeitsplatz hinunter steigen, um sich die Schnittstelle anzusehen und dann, nach Rückkehr am Bedienerarbeitsplatz, entsprechende Eingaben zur Ansteuerung des Aktors durchzuführen. Im Ergebnis ist das Ankoppeln der Geräte in vielen Fällen sehr zeitaufwändig.

Es wurden schon Anordnungen vorgeschlagen, bei denen zusätzliche Eingabeelemente zur Beeinflussung der Position von Kupplungen und zur Auswahl einer Übersetzungsstufe einschließlich einer Neutralstellung eines Zapfwellengetriebes an einem rückwärtigen Kotflügel des Arbeitsfahrzeugs angebracht sind (z.B. DE 10 2005 003 325 A1). Hier steht der Bediener an der Rückseite des Arbeitsfahrzeugs, wenn er die zusätzlichen Eingabeelemente betätigt, was unter Sicherheitsgesichtspunkten nicht immer optimal ist.

Weiterhin wurden drahtgebundene oder drahtlose Fernbedienungen für landwirtschaftliche Arbeitsfahrzeuge vorgeschlagen, mit denen der Bediener von außerhalb des Bedienerarbeitsplatzes u.a. einen hydraulischen Kraftheber und eine Zapfwelle ansteuern kann (EP 1 004 230 A2). Hier ist eine speziell auf das Arbeitsfahrzeug zugeschnittene Fernbedienung vorgesehen, die sich bei den nicht allzu hohen Stückzahlen landwirtschaftlicher Arbeitsfahrzeuge als relativ kostspielig erweist.

Die DE 102 17 398 A1 beschreibt ein landwirtschaftliches Arbeitsfahrzeug, das mit einer Steuerung versehen ist, die über einen Funkstandard (Bluetooth) mit einem Mobiltelefon kommuniziert. Das Mobiltelefon kann somit zur Fernsteuerung von nicht näher spezifizierten Stellgliedern, Hydraulikkreisen und Antrieben des Arbeitsfahrzeugs oder Geräts verwendet werden.

In top agrar 11/2012, Seite 88, wird ein mit einem Isobus eines landwirtschaftlichen Fahrzeugs zusammenwirkendes Terminal beschrieben, das Daten bezüglich einer Auftragsabwicklung an eine beabstandete Station sendet und von dort auch neue Aufträge und Applikationskarten drahtlos empfängt. Über das hierbei verwendete Portal lassen sich auch über ein Smartphone Daten senden und empfangen, sodass ein Transportfahrzeugfahrer beispielsweise die Position eines Häckslers und dessen aktuellen Auftrag einsehen kann.

Eine Fernsteuerung eines Schleppers mit einem Mobiltelefon wird in dem Film http://www.youtube.com/watch?v=vKarhp8RJTc gezeigt.

Auch wurde vorgeschlagen (http://www.landtechnikmagazin.de/Messen-und-Veranstaltungen-Bild-SIMA-Innovation-Award-2013-Goldmedaille-fuer-Claas-UT-App-Universal-Terminal-ISOBUS-20439-3902.php), eine App auf einem Tablet-Computer zu installieren, mit welcher der Computer auf das unter der Norm ISO 11783 laufende Bus-System des Traktors zugreifen kann. Dadurch soll der Landwirt in die Lage versetzt werden, die Funktionen des Isobus-Systems auf seinem Tablet-PC zu aktivieren, um auf nützliche Daten (beispielsweise Kundendaten) zuzugreifen, aber auch andere Applikationen oder Funktionen zu nutzen (E-Mails, Wetter, usw.). In dem Film https://www.facebook.com/permalink.php?id=304472412958784&story fbid=129422920562601 wird dargestellt, dass diese App auch zur Fernsteuerung von Funktionen einer Maschine verwendet werden kann. Dabei zeigt die Bildschirmoberfläche mehrere Symbole für unterschiedliche Funktionen, die durch Antippen der Symbole aktiviert werden können.

### Aufgabe

Das der Erfindung zu Grunde liegende Problem wird darin gesehen, dem Bediener eines Arbeitsfahrzeugs auf einfache und kostengünstige Art und Weise eine problemlose Ansteuerung der Schnittstelle zum Koppeln eines Geräts an das Arbeitsfahrzeug zu ermöglichen.

### Lösung

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Ein landwirtschaftliches Arbeitsfahrzeug ist mit einer Geräteschnittstelle und einer Anordnung zur Kontrolle der Geräteschnittstelle ausgestattet. Die Anordnung weist eine Steuereinheit des Arbeitsfahrzeugs auf, die mit einem fremdkraftbetätigten Aktor zur Verstellung der Position der Geräteschnittstelle in kontrollierender Verbindung steht, sowie einen tragbaren, in einer Hand haltbaren Computer mit Eingabemitteln und einem Prozessor, der mit der Steuereinheit in drahtloser Kommunikationsverbindung steht und auf dem eine Software heruntergeladen ist, welche eine Kontrolle des Aktors mittels der Eingabemittel über den Prozessor und die Steuereinheit ermöglicht.

Auf diese Weise wird ein kommerziell verfügbarer Computer, bei dem es sich insbesondere um einen Tablet-Computer oder ein Smartphone handeln kann, als Fernbedienung zur Kontrolle des Aktors der Geräteschnittstelle verwendet. Auf den Computer wird eine Software (App) heruntergeladen, die die Eingabemittel des Computers über den Prozessor des Computers und die Steuereinheit des Arbeitsfahrzeugs mit dem Aktor koppelt. Der Bediener kann sich somit von seinem Bedienerarbeitsplatz an eine geeignete Stelle in der Nähe der Geräteschnittstelle begeben und mit den Eingabemitteln des Computers die Geräteschnittstelle ansteuern, um den Kopplungsvorgang des Geräts an den Arbeitsfahrzeug zu erleichtern und zu beschleunigen.

Bei der Geräteschnittstelle kann es sich um eine vordere Dreipunktkupplung handeln. Der Aktor dient hier zum Anheben und Absenken unterer Lenker und/oder zur Längenverstellung eines oberen Lenkers und/oder zum Öffnen und Schließen einer Verriegelung des Geräts an einem Lenker und/oder zum Umschalten zwischen einer einfachen und einer doppelten Wirkung des Aktors.

Die Geräteschnittstelle kann zusätzlich oder alternativ eine hintere Dreipunktkupplung sein. Der Aktor dient dort zum Anheben und Absenken unterer Lenker und/oder zur Längenverstellung eines oberen Lenkers und/oder zum Verlängern und Verkürzen hydraulischer Stabilisatoren und/oder zum Öffnen und Schließen einer Verriegelung des Geräts an einem Lenker.

Bei der Geräteschnittstelle kann es sich weiterhin um eine positionsverstellbare oder feste Gerätekupplung handeln, insbesondere eine Anhängerkupplung. Der Aktor dient dort zum Öffnen und Schließen der Gerätekupplung und/oder zur Verstellung der Gerätekupplung in Vorwärtsrichtung und/oder vertikaler Richtung.

Schließlich kann die Geräteschnittstelle eine Zapfwelle sein und der Aktor zum Ein- und Ausschalten der Zapfwelle dienen.

Der tragbare Computer kann über eine Funkverbindung mit der Steuereinrichtung kommunizieren, insbesondere nach einem netzwerkprotokollbasierten Standard (WLAN) oder einem Standard für Mobiltelefonie (GSM, UMTS, LTE).

Die Kommunikation zwischen dem Computer und der Steuereinheit kann in der Weise erfolgen, dass die Steuereinheit mit einem Fahrzeugbus verbunden ist, der über eine Schnittstelle mit einem Gerätebus kommuniziert, an den ein Bus eines trennbar mit dem Arbeitsfahrzeug koppelbaren Geräts anschließbar ist und der es ermöglicht, über ein virtuelles Terminal einen Aktor des Geräts zu kontrollieren und/oder durch eine am Fahrzeugbus angeschlossene Steuerung des Geräts einen Aktor des Arbeitsfahrzeugs zu kontrollieren. An den Gerätebus ist zusätzlich eine Kommunikationseinrichtung angeschlossen, die eine Kommunikationssteuerung, einen Protokollumsetzer und ein mit einem Sende- und Empfangsmodul des Computers kommunizierendes Sende- und Empfangsmodul umfasst. Der Protokollumsetzer setzt ein vom Computer verwendetes Protokoll, insbesondere ein Internet-Protokoll, in das vom Gerätebus verwendete Protokoll, insbesondere ISO 11783, um. Die Kommunikationssteuerung simuliert ein am Gerätebus angeschlossenes Gerät, um mit dem Computer die Position(en) der Geräteschnittstelle(n) des Arbeitsfahrzeugs zu steuern.

Vorzugsweise ist die Schnittstelle programmiert, anhand in einer Sicherheitsbibliothek abgelegten Sicherheitskriterien zu überprüfen, ob sie ein am Gerätebus angeschlossenes Gerät autorisiert, über den Fahrzeugbus Funktionen des Arbeitsfahrzeugs zu steuern und die Kommunikationssteuerung betreibbar, nur nach einer erfolgreichen Paarung insbesondere durch Austausch eines Paarungscodes und/oder Autorisierung des Computers und des Arbeitsfahrzeugs beispielsweise durch Nahfeldkommunikation und/oder Eingaben durch den Bediener in den Computer und/oder ein arbeitsfahrzeugseitiges Terminal eine Kennung an die Schnittstelle zu übersenden, anhand derer die Schnittstelle erkennt, dass die Kommunikationssteuerung und der damit kommunizierende Computer die Sicherheitskriterien erfüllt und Anweisungen an den Gerätebus übersenden darf.

Aus sicherheitstechnischen Erwägungen ist eine Fernbedienung der Geräteschnittstelle des Arbeitsfahrzeugs nur möglich, wenn zumindest eine der folgenden Bedingungen erfüllt ist: der Computer und das Arbeitsfahrzeug sind durch Austausch eines Paarungscodes gepaart, der Computer und das Arbeitsfahrzeug sind durch Nahfeldkommunikation und/oder Eingaben durch den Bediener in den Computer und/oder ein arbeitsfahrzeugseitiges Terminal erfolgreich untereinander autorisiert, das Arbeitsfahrzeug befindet sich im Stillstand, das Arbeitsfahrzeug hat in vorgegebener Zeit eine Herzschlagnachricht vom Computer erhalten, und es liegt kein genereller Zeitablauf (Timeout) vor.

Der Computer und das Arbeitsfahrzeug können zwischen einem ersten Zustand, in den eine Fernbedienung nicht möglich ist, und einem zweiten Zustand, in dem eine Fernbedienung möglich ist, umgeschaltet werden. Ein Übergang vom ersten Zustand in einen Modus des zweiten Zustands, in dem durch Betätigen einer berührungsempfindlichen Anzeigeeinrichtung oder Tasten des Computers eine Fernbedienung der Geräteschnittstelle möglich ist, erfolgt nur dann, wenn der Computer und das stillstehende Arbeitsfahrzeug durch Austausch eines Paarungscodes gepaart und ggf. untereinander autorisiert sind und die zu kontrollierende Geräteschnittstelle ausgewählt ist. Hingegen erfolgt nach einem generellen Zeitablauf und/oder einer fehlenden Herzschlagnachricht und/oder bei einem sich bewegenden Arbeitsfahrzeug selbsttätig ein Übergang in den ersten Zustand, aus dem der Übergang in den beschriebenen (eine Fernbedienung ermöglichenden) Modus des zweiten Zustands nur durch einen erneuten Austausch eines Paarungscodes und ggf. Autorisierung und nach erneuter Auswahl der zu kontrollierenden Geräteschnittstelle möglich ist.

Es wird weiterhin vorgeschlagen, dass der Computer durch eine (zeitablaufbedingte oder durch den Bediener bewerkstelligte) Sperrung seiner Anzeigeeinrichtung oder Ansprechen eines Näherungsschalters, das darauf hindeutet, dass der Bediener den Computer in eine Bekleidungstasche gesteckt oder anderweitig weggelegt hat und somit nicht mehr benötigt, in einen passiven Modus gelangt, in dem eine Fernbedienung nicht möglich ist, und aus dem passiven Zustand eine Rückkehr in den beschriebenen Modus, in dem durch Betätigen einer berührungsempfindlichen Anzeigeeinrichtung oder Tasten des Computers eine Fernbedienung der Geräteschnittstelle möglich ist, ohne neue Paarung und/oder Authentisierung nur nach einer Bestätigungseingabe möglich ist, in welcher der Bediener bestätigt, das zuvor kontrollierten Arbeitsfahrzeug weiterhin kontrollieren zu wollen.

Schließlich kann ein Warnlicht des Arbeitsfahrzeugs aktiviert werden, wenn sich der Computer in einem Modus befindet, in dem durch Betätigen einer berührungsempfindlichen Anzeigeeinrichtung oder Tasten des Computers eine Fernbedienung der Geräteschnittstelle möglich ist. Alternativ oder zusätzlich kann ein Vibrationssignal des Computers aktiviert werden, wenn in dem besagten Modus eine Aktivierung der berührungsempfindlichen Anzeigeeinrichtung oder Tasten des Computers stattfindet.

Die vorliegende Erfindung kann an landwirtschaftlichen Arbeitsfahrzeugen beliebiger Art verwendet werden, an denen Geräte anbringbar sind, z.B. an Schleppern oder an selbstfahrenden Erntemaschinen, an denen als Geräte beispielsweise Erntevorsätze anbringbar sind.

### Ausführungsbeispiel

In den Zeichnungen ist ein nachfolgend näher beschriebenes Ausführungsbeispiel der Erfindung dargestellt. Es zeigen:
Fig. 1 eine seitliche Ansicht eines landwirtschaftlichen Arbeitsfahrzeugs, dem ein tragbarer Computer als Fernbedienung zugeordnet ist,
Fig. 2 ein Schaltdiagramm der Bussysteme des Arbeitsfahrzeugs,
Fig. 3 ein Schema mit möglichen Zuständen des Systems aus Arbeitsfahrzeug und tragbarem Computer,
Fig. 4 ein Flussdiagramm, nach dem das System aus Arbeitsfahrzeug und tragbarem Computer bei der Kontrolle der Geräteschnittstelle vorgehen, und
Fig. 5 ein Schema mit möglichen Zuständen des tragbaren Computers.

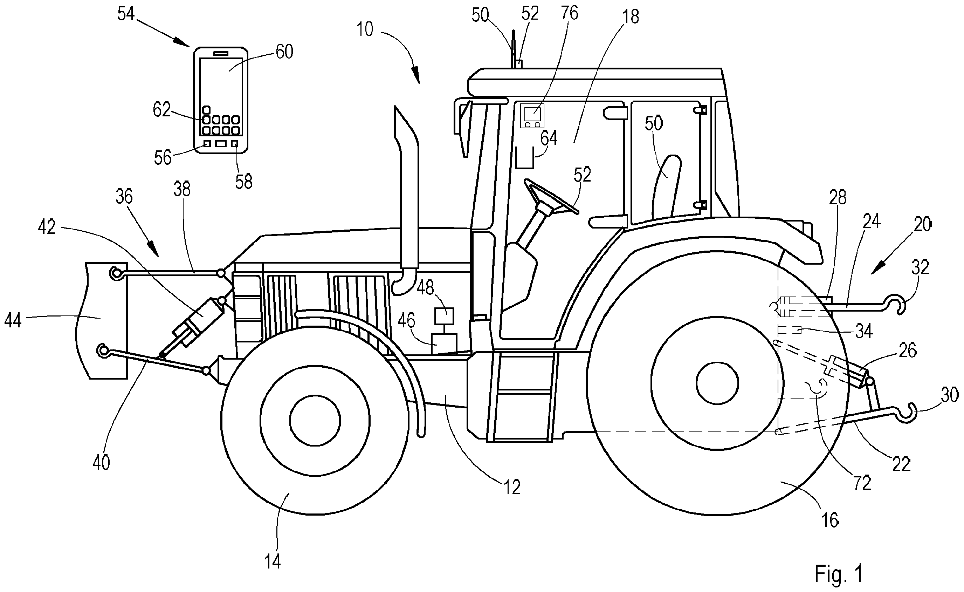

In der Figur 1 ist ein landwirtschaftliches Arbeitsfahrzeug 10 in Form eines Schleppers dargestellt, der sich auf einem Rahmen 12 aufbaut und durch vordere, lenkbare Räder 14 und antreibbare, rückwärtige Räder 16 auf dem Boden abstützt. Der Bedienerarbeitsplatz befindet sich in einer Kabine 18.

Am rückwärtigen Ende des Rahmens 12 ist eine hintere Dreipunktkupplung 20 angeordnet, die sich aus zwei nebeneinander angeordneten, unteren Lenkern 22 und einem oberen Lenker 24 zusammensetzt. Die unteren Lenker 22 sind durch Aktoren 26 in Form von Hydraulikzylindern höhenverstellbar. Der obere Lenker 24 ist durch einen Aktor 28 in Form eines Hydraulikzylinders längenveränderbar. Durch Verstellung der Aktoren 26 können die rückwärtigen Enden der unteren Lenker 22 in eine Position verbracht werden, in der sie mit einem beliebigen Gerät (nicht gezeigt) gekoppelt werden können. Am rückwärtigen Ende der unteren Lenker 22 sind in an sich bekannter Weise Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1: Kategorien 1, 2, 3 und 4 beschrieben werden) angeordnet, während am rückwärtigen Ende des oberen Lenkers 24 ein ebenfalls konventioneller Oberlenker-Koppelpunkt 32 vorgesehen ist.

An der Rückseite des Rahmens 12 ist weiterhin eine Zapfwelle 34 zum Antrieb beweglicher Elemente des Geräts angebracht.

Am vorderen Ende des Rahmens 12 ist eine vordere Dreipunktkupplung 36 angeordnet, die zwei untere Lenker 40 umfasst, die jeweils mittels eines Aktors 42 höhenverstellbar sind. Außerdem umfasst die vordere Dreipunktkupplung 36 einen oberen Lenker 38, der hier als nicht-längenverstellbar dargestellt ist. Die Lenker 38, 40 sind mit einem Gerät 44 beliebiger Art verbunden.

Eine Steuereinheit 46 ist elektrisch mit einer Ventileinheit 48 verbunden, die wiederum u.a. die Aktoren 26, 28, 42 hydraulisch kontrolliert. Die Steuereinheit 46 ist außerdem mit einem Sende- und Empfangsmodul 52 verbunden, das eine Antenne 50 umfasst.

Ein tragbarer Computer 54 umfasst einen Prozessor 56, ein Sende- und Empfangsmodul 58, eine vorzugsweise berührungsempfindliche Anzeigeeinrichtung 60 und eine Tastatur 62. Der Prozessor 56 kommuniziert über das Sende- und Empfangsmodul 58 und das Sende- und Empfangsmodul 52 mit der Steuereinheit 46, um Befehle für die Aktoren 26, 28, 42, die über die als Eingabemittel dienende Tastatur 62 und/oder die berührungsempfindliche Anzeigeeinrichtung 60 eingegeben werden, an das Arbeitsfahrzeug 10 zu übersenden. Die Sende- und Empfangsmodule 52, 58 können über einen beliebigen Standard (z.B. für Mobiltelefone, wie GSM oder UMTS; oder Computer-Netzwerke, z.B. WLAN oder Bluetooth) miteinander kommunizieren.

Der Computer 54 kann als kommerziell verfügbarer Tablet-Computer oder als Smartphone ausgeführt sein. Um die beschriebene Funktion auszuführen, läuft auf ihm eine Software, die als App in an sich bekannter Weise nach einer Authentisierung von einer Internetadresse heruntergeladen wurde. Falls der Computer 54 nicht als Fernbedienung benötigt wird, kann er in eine Halterung 64 in der Kabine 18 eingesteckt werden, die als Docking-Station dient und in der die Akkus des Computers 54 geladen werden. In der Halterung 64 kann der Computer 54 als Eingabeeinrichtung zur Kontrolle beliebiger Funktionen des Arbeitsfahrzeugs 10 dienen und insbesondere ein virtuelles Terminal nach ISO 11783 emulieren.

Der Computer 54 kann als Fernbedienung genutzt werden, um das Ankoppeln eines Geräts 44 an eine der Geräte-Schnittstellen des Arbeitsfahrzeugs 10 zu erleichtern. Das Arbeitsfahrzeug 10 wird demnach zunächst in die Nähe des Geräts 44 gefahren, bis er hinreichend nahe am Gerät 44 steht, um es anzukoppeln. Dann verlässt der Bediener mit dem Computer 54 seinen Bedienerarbeitsplatz in der Kabine 18 und begibt sich in die Nähe der jeweils betroffenen Schnittstelle. Dann betätigt er die Eingabemittel des Computers 54, um die Lenker 22, 24, 38, 40 in eine geeignete Position zu verbringen und verriegelt schließlich das Gerät 44 an den Lenkern 22, 24 oder 38, 40 an, sei es manuell oder durch weitere, mittels des Computers 54 über den beschriebenen Weg kontrollierte Aktoren (nicht gezeigt). Analog kann auch die Zapfwelle 34 über den Computer 54 ein- und ausgeschaltet oder ein Zapfwellengetriebe in eine Neutralstellung verbracht werden. Zudem kann auch eine feste oder verstellbare Kupplung (nicht gezeigt) für eine Deichsel über den Computer 54 geöffnet und geschlossen und ggf. in ihrer Position verstellt werden.

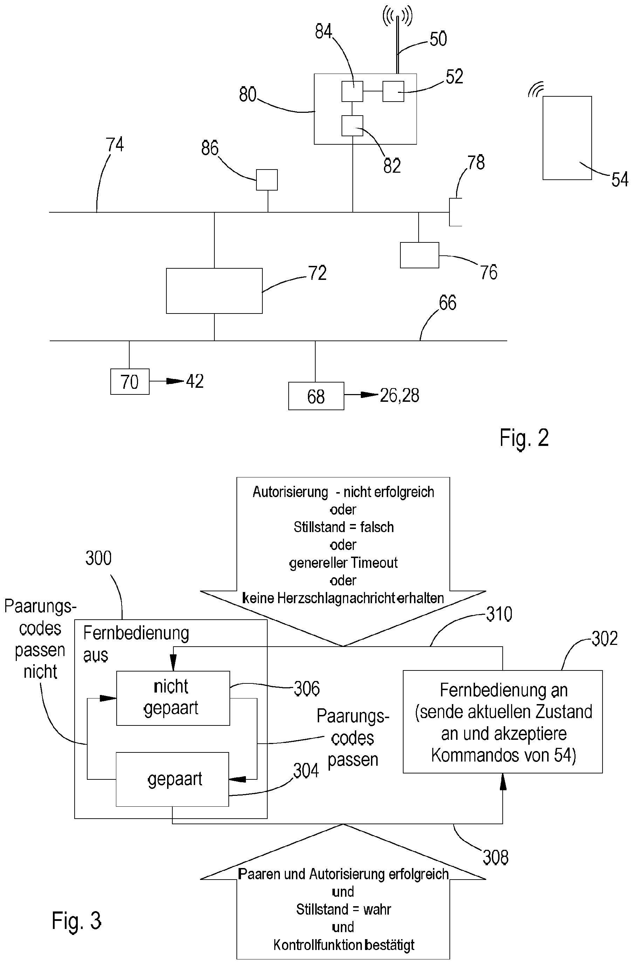

Die Figur 2 zeigt die im Arbeitsfahrzeug 10 verwendete Hardware detaillierter. Ein Fahrzeugbus 66 verbindet Arbeitsfahrzeug 10 eigene Steuerungen (Controller) 68, 70 untereinander, welche die Funktion der Steuerung 46 aus Figur 1 übernehmen. Der Fahrzeugbus 66 kann ein übliches Protokoll verwenden, z.B. CAN. Die Steuerung 68 kontrolliert die Aktoren 26, 28 und die Steuerung 70 kontrolliert den Aktor 42, wobei die Aktoren 26, 28, 42 entweder elektrisch betrieben werden und direkt durch die zugeordnete Steuerung 68 oder 70 bestromt werden, oder die Aktoren 26, 28, 42 sind hydraulisch betätigt und werden über die zugehörige Steuerung 68 oder 70 über die in der Figur 1 gezeigten elektrohydraulische Ventileinheiten 48 kontrolliert. Weitere Steuerungen (nicht gezeigt) können in an sich bekannter Weise am Fahrzeugbus 66 angeschlossen sein, wie z.B. die Motorsteuerung, und weitere Funktionen des Arbeitsfahrzeugs 10 kontrollieren. Eine Schnittstelle 72, die als zentrale Kontrolleinheit des Arbeitsfahrzeugs 10 dienen kann, verbindet den Fahrzeugbus 66 mit einem Gerätebus 74, der ebenfalls ein übliches Protokoll, z.B. nach ISO 11783, verwenden kann und an dem durch eine Steckdose 78 ein Bus eines trennbar mit dem Arbeitsfahrzeug 10 gekoppelten Geräts (z.B. einer Ballenpresse) angeschlossen werden kann, um über ein virtuelles Terminal 76 einen Aktor des Geräts zu kontrollieren, bzw. durch eine Steuerung des Geräts einen Aktor des Arbeitsfahrzeugs 10 zu kontrollieren (so genannte Tractor-Implement-Automation). An den Gerätebus 74 ist auch eine Kommunikationseinrichtung 80 angeschlossen, die eine Kommunikationssteuerung 82, einen Protokollumsetzer 84 und das Sende- und Empfangsmodul 52 umfasst. Der Protokollumsetzer 84 setzt im Betrieb ein vom Computer 54 verwendetes Protokoll, bei dem es sich insbesondere um ein Internet-Protokoll handelt, in das vom Gerätebus 74 verwendete Protokoll, insbesondere ISO 11783, um. Die Kommunikationssteuerung 82 simuliert ein am Gerätebus 74 angeschlossenes Gerät, um mit dem Computer 54 die Positionen der Geräteschnittstellen 20, 36 des Arbeitsfahrzeugs 10 zu steuern.

Die Kommunikation erfolgt demnach vom Computer 54 über dessen Sende- und Empfangsmodul 56 zum Sende- und Empfangsmodul 52 der Kommunikationseinrichtung 80. Der Protokollumsetzer 84 übersetzt das vom Computer 54 verwendete Protokoll in jenes des Gerätebusses 74 und übergibt vom Computer 54 erhaltene Anweisungen (nach Übersetzung in Anweisungen des vom Gerätebus 74 verwendeten Protokolls) an die Kommunikationssteuerung 82, welche sie über den Gerätebus 74, die Schnittstelle 72 und den Fahrzeugbus 66 an die Steuerung 68 und/oder 70 weiterleitet. In umgekehrter Weise werden Daten von der Steuerung 68, 70 (z.B. Sensorwerte hinsichtlich der aktuellen Position der Aktoren 26, 28, 42) zum Computer 54 übertragen. Durch die Kommunikationseinrichtung 80 kann somit der tragbare Computer 54 über sein Sende- und Empfangsmodul 58 mit der Kommunikationseinrichtung 80 in beiden Richtungen Daten austauschen, die über den Gerätebus 74, die Schnittstelle 72 und den Fahrzeugbus 66 an die Steuerungen 68 und 70 gelangen, um mit dem Computer 54 die Positionen der Geräteschnittstellen 20, 36 des Arbeitsfahrzeugs 10 verändern und erkennen zu können.

Aus Sicherheitsgründen ist die Kontrolle der Geräte-Schnittstellen 20, 36 durch den Computer 54 nur möglich, wenn eine Reihe von Bedingungen erfüllt ist. Hierzu wird auf die Figuren 3 bis 5 verwiesen. Die Figur 3 zeigt mögliche Zustände der Kombination aus dem Arbeitsfahrzeug 10 und dem Computer 54. Es gibt zwei grundlegende Zustände 300 und 302. In einem ersten Zustand 300 ist die Fernbedienungsfunktion des Computers 54 ausgeschaltet, d.h. eine Kontrolle der Aktoren 26, 28, 42 nicht möglich. Der erste Zustand 300 umfasst zwei Unterzustände, nämlich einen ersten Unterzustand 304, in dem das Arbeitsfahrzeug 10 und der Computer 54 gepaart sind (d.h. eine Verbindung untereinander hergestellt ist) und einen zweiten Unterzustand 306, in dem das Arbeitsfahrzeug 10 und der Computer 54 nicht gepaart sind. Ein Übergang vom ersten Unterzustand 304 in den zweiten Unterzustand 306 ist dadurch möglich, dass der Computer 54 einen passenden Paarungscode an das Arbeitsfahrzeug 10 übersendet, während ein Übergang vom zweiten Unterzustand 306 in den ersten Unterzustand 304 erzielt wird, wenn ein Paarungscode des Computers 54 nicht oder nicht mehr zum Paarungscode des Arbeitsfahrzeugs 10 passt.

Ein Übergang vom ersten Unterzustand 304 des ersten Zustands 300 in den zweiten Zustand 302, in dem eine Fernbedienung der Aktoren 26, 28, 42 möglich ist, findet dann statt (Übergang 308), wenn die Paarung und ggf. Autorisierung erfolgreich war (d.h. die Paarungscodes passen und ggf. eine oder mehrere zusätzliche Bedingungen erfüllt sind), das Arbeitsfahrzeug 10 sich nicht bewegt (Geschwindigkeit = 0) und beim Computer 54 eine Bestätigung der Fernbedienfunktion vorgenommen wurde. Letztere kann dadurch erfolgen, dass eine bestimmte Eingabe im Terminal 76 des Arbeitsfahrzeugs 10 erfolgt, z.B. durch Bestätigen einer Automatikfunktion oder automatischen Lenkfunktion. Es wäre aber auch denkbar, auf diese Bestätigung zu verzichten. Im zweiten Zustand 302 ist dann eine Fernbedienung der erwähnten Aktoren 26, 28, 42 des Arbeitsfahrzeugs 10 durch manuelle Eingaben des Bedieners in den Computer 54 möglich. Zudem können dann Informationen hinsichtlich des aktuellen Zustands der Aktoren 26, 28, 42 vom Arbeitsfahrzeug 10 an den Computer 54 übersandt und dort zur Anzeige gebracht werden.

Ein Übergang 310 vom zweiten Zustand 302 in den ersten Zustand 300 findet genau dann statt, wenn eine Autorisierung des Computers 54 nicht erfolgreich war oder sich das Arbeitsfahrzeug 10 nicht im Stillstand befindet oder ein genereller Zeitablauf (Timeout, d.h. über eine bestimmte Zeit von z.B. 20 min keine Eingabe mehr über den Computer 54 erfolgte) vorliegt oder das Arbeitsfahrzeug 10 über eine bestimmte Zeit keine Herzschlagnachricht vom Computer 54 mehr erhalten hat, die letzterer in vorbestimmten Zeitabständen von z.B. einigen s an den Arbeitsfahrzeug 10 übersendet.

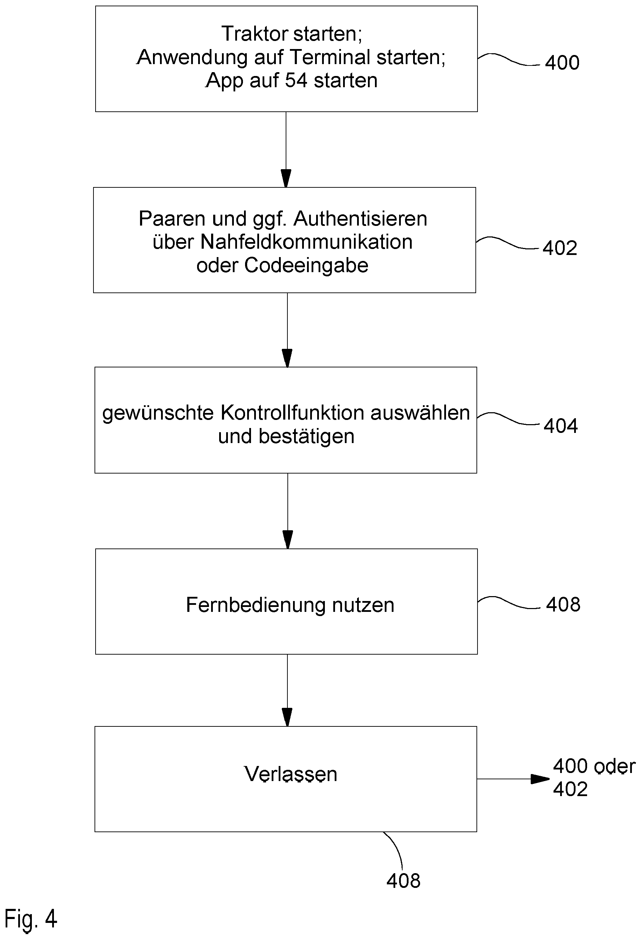

Die Figur 4 zeigt ein Flussdiagramm, nach dem das Arbeitsfahrzeug 10 und der Computer 54 betrieben werden, wenn eine Fernbedienungsfunktion durch den Computer 54 erwünscht ist. Im ersten Schritt 400 wird das Arbeitsfahrzeug 10 gestartet (d.h. dessen Verbrennungsmotor in Gang gesetzt), auf einem arbeitsfahrzeugseitigen Terminal, bei dem es sich um das virtuelle Terminal 76 oder ein am Fahrzeugbus 66 angeschlossenes Terminal handeln kann, eine (insbesondere von der Kommunikationssteuerung 82 bereitgestellte) Software für die Fernbedienungsfunktion gestartet und auch auf dem Computer 54 eine (insbesondere aus einem geeigneten Store) herunterladbare Software (app) gestartet wird. Falls die App zum ersten Mal verwendet wird, kann vorgesehen sein, dass der Bediener zuvor noch einen Identifikationscode für das Arbeitsfahrzeug 10 in den Computer 54 eingibt, insbesondere den Namen eines WLANs des Arbeitsfahrzeugs 10. Im Schritt 402 erfolgt dann eine Paarung und Authentisierung des Computers 54 mit dem Arbeitsfahrzeug 10 (die Begriffe Autorisierung und Authentisierung werden hier synonym verwendet). Dazu kann, nachdem eine drahtlose Kommunikation zwischen dem Computer 54 und der Kommunikationssteuerung 82 hergestellt ist und sich beide gegeneinander durch Austausch eines Paarungscodes identifiziert haben, der Bediener über das arbeitsfahrzeugseitige Terminal oder die Anzeigeeinrichtung 60 des Computers 54 aufgefordert werden, den Computer 54 an eine geeignete Stelle in der Kabine 18 zu legen, an der eine Nahfeldkommunikation zwischen dem Computer 54 und einer geeigneten Nahfeldkommunikationseinrichtung 86 des Arbeitsfahrzeugs 10 (die sich im virtuellen Terminal 76 befinden kann) stattfindet und sich beide gegenseitig authentisieren. Alternativ oder zusätzlich kann auf der Anzeigeeinrichtung 60 des Computers 54 ein Code angezeigt werden, den der Bediener in das arbeitsfahrzeugseitige Terminal 76 eingibt und bestätigt (oder umgekehrt). Es wäre aber auch denkbar, auf die Authentisierung im Schritt 402 zu verzichten und sich nur auf die Paarung zwischen Computer 54 und Arbeitsfahrzeug 10 zu verlassen.

Nach der Paarung und ggf. Authentisierung wird der Computer 54 vom Gerätebus 74 wie ein an der Steckdose 78 angeschlossenes Gerät (z.B. Ballenpresse) behandelt, das erst nach Erfüllen einiger Sicherheitskritierien, die durch die Schnittstelle 72 anhand einer das Gerät identifizierenden Sicherheitsbibliothek geprüft werden, autorisiert wird, Funktionen des Arbeitsfahrzeugs 10 zu steuern (wie Geschwindigkeit oder Lenkung). Die Kommunikationssteuerung 82 sendet somit (nach einer erfolgreichen Paarung und ggf. Authentisierung des Computers 54, wie anhand des Schritts 402 beschrieben) eine Kennung an die Schnittstelle 72, anhand derer letztere erkennt, dass die Kommunikationssteuerung 82 (und somit der Computer 54) die Sicherheitskriterien erfüllt und somit Anweisungen an den Gerätebus 74 übersenden darf. Im vorliegenden Fall steuert der Computer 54 die Steuerungen 68, 70.

Nach erfolgreichem Durchlauf des Schritts 402 erfolgt der Schritt 404, in dem der Bediener auf dem Computer 54 eine gewünschte Kontrollfunktion (Kontrolle der vorderen oder hinteren Geräteschnittstelle) auswählt und ggf. bestätigt (vgl. den Übergang 308 in Figur 3). Im folgenden Schritt 406 kann der Bediener nun über den Computer 54 (d.h. über die berührungsempfindliche Anzeigeeinheit 60 und/oder ggf. über Tasten) die Aktoren 26, 28 oder 42 kontrollieren, je nachdem, welche Kontrollfunktion im Schritt 404 ausgewählt wurde. Sobald ein Fernbedienen nicht mehr vorzunehmen ist, kann der Bediener im Schritt 408 den Fernbedienungsmodus verlassen und zum Schritt 400 zurückkehren, z.B. indem er mit dem Computer 54 die App verlässt oder das Arbeitsfahrzeug 10 in Bewegung setzt. Falls später wieder eine Fernbedienung mit dem Computer 54 gewünscht wird, folgt der Schritt 400 oder 402 (letzterer nur, wenn die App inzwischen weitergelaufen ist).

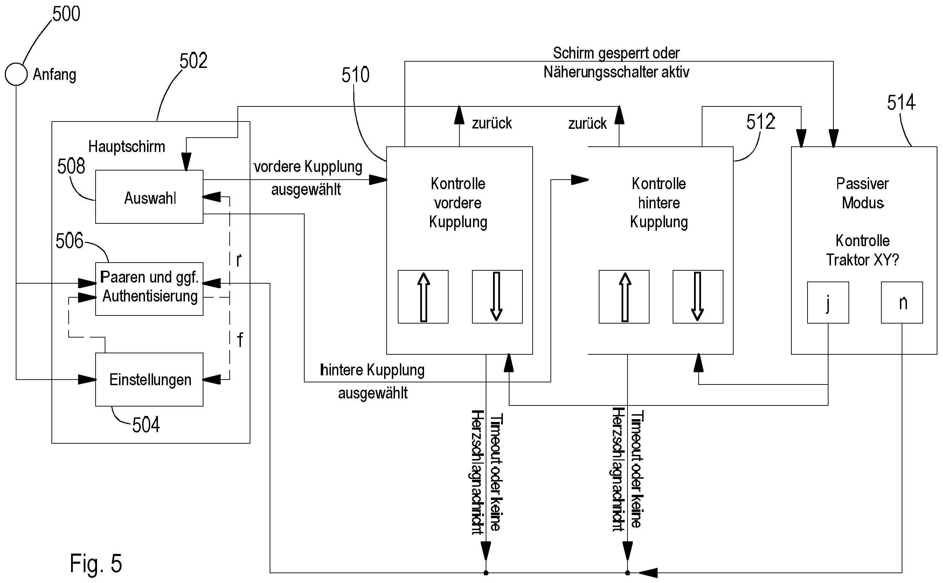

Die Figur 5 zeigt mögliche Zustände des Computers 54, auf dem die erwähnte App läuft. Ausgehend vom Start 500 gelangt man in einen Hauptschirmmodus, der drei Optionen bietet. Ausgehend vom Start 500 kommt man entweder in einen Einstell-Modus 504, in dem Einstellungen des Computers 54 (oder Arbeitsfahrzeugs 10) verändert werden können, z.B. eine Eingabe eines Paarungscodes (d.h. Identifikation einer Netzwerknummer des Arbeitsfahrzeugs 10 in den Computer 54 für die Paarung in den Schritten 304 und 506), der aber auch einen Übergang in einen Authentisierungsmodus 506 ermöglicht, der auch direkt vom Start 500 erreichbar ist. Im Authentisierungsmodus 506 erfolgt die oben anhand des Schritts 402 beschriebene Authentisierung und Paarung zwischen Arbeitsfahrzeug 10 und Computer 54. Ist diese erfolglos, geht der Computer 54 wieder in den Einstell-Modus 504 über.

Ist die Authentisierung hingegen erfolgreich, gelangt man in einen Auswahl-Modus 508, in dem der Bediener gefragt wird, ob er die vordere Geräteschnittstelle 36 oder die hintere Geräteschnittstelle 20 kontrollieren will. Im ersten Fall gelangt man dann in einen Modus 510, in dem der Bediener die vordere Geräteschnittstelle 36 kontrollieren kann, indem er auf der berührungsempfindlichen Anzeigeeinrichtung 60 des Computers 54 angezeigte Tasten zum Anheben oder Absenken der vorderen Geräteschnittstelle 36 drücken kann. Gleichzeitig kann eine Information hinsichtlich der Position der vorderen Geräteschnittstelle 36 auf der Anzeigeeinrichtung 60 dargestellt werden. Beim Betätigen einer der Tasten kann eine haptische Rückmeldung an den Bediener des Computers 54 erfolgen, z.B. durch Aktivieren eines Vibrationssignals des Computers 54. Durch eine "Zurück"-Auswahl kann der Bediener den Computer 54 wieder in den Auswahl-Modus 508 zurückbringen. Im zweiten Fall, d.h. wenn der Bediener eingegeben hat, dass er die hintere Gerätschnittstelle 20 kontrollieren möchte, gelangt man in einen Modus 512, in dem der Bediener die hintere Geräteschnittstelle 20 kontrollieren kann, indem er auf der berührungsempfindlichen Anzeigeeinrichtung 60 des Computers 54 angezeigte Tasten zum Anheben oder Absenken der hinteren Geräteschnittstelle 20 drücken kann. Beim Betätigen einer der Tasten kann eine haptische Rückmeldung an den Bediener des Computers 54 erfolgen, z.B. durch Aktivieren eines Vibrationssignals des Computers 54. In beiden Modi 510, 512 kann eine Warnlampe (Rundumlicht und/oder Warnblinker des Arbeitsfahrzeugs 10 aktiviert werden, um in der Nähe stehende Personen über die gerade stattfindende Fernbedienfunktion zu informieren. In beiden Modi 510, 512 geht der Computer 54 wieder in den Authentisierungsmodus 506 über, wenn ein Timeout vorliegt, d.h. über eine bestimmte Zeit der Computer 54 keine Bedienereingabe erhalten hat oder keine Herzschlagnachricht vom Arbeitsfahrzeug 10 empfangen hat (vgl. den Übergang 310 in der Figur 3).

Ausgehend von den Modi 510 und 512 gelangt der Computer 54 in einen passiven Modus 514, wenn die Anzeigeeinrichtung 60 gesperrt ist (durch entsprechende Eingabe oder Zeitablauf) oder ein Näherungsschalter aktiv ist, der angibt, ob die Anzeigeeinrichtung 60 des Computers 54 verdeckt ist, was z.B. darauf hindeutet, dass sich der Computer 54 in einer Kleidungstasche des Bedieners befindet, sodass eine Fernbedienung nicht sinnvoll ist. In dem passiven Modus 514 wird der Bediener durch die Anzeigeeinrichtung 60 des Computers 54 gefragt, ob er den jeweiligen Arbeitsfahrzeug 10, mit dem der Computer 54 gerade kommuniziert, tatsächlich steuern will. Gibt der Bediener "ja" ein, gelangt er wieder in den Modus 510 oder 512, aus dem er gekommen ist, und gibt er "nein" ein, gelangt er wieder in den Authentisierungsmodus 506 des Hauptschirms 502.

Die vorgesehenen Sicherheitsmechanismen gewährleisten, dass Fehler bei der Verwendung der Fernbedienungsfunktion weitgehend vermieden werden. Durch die Paarung und ggf. Authentisierung des Computers 54 mit dem Arbeitsfahrzeug 10 wird sichergestellt, dass nur ein einziger Computer 54 gleichzeitig mit dem Arbeitsfahrzeug 10 kommunizieren kann. Die Fernbedienungsfunktion ist nur im Stillstand des Arbeitsfahrzeugs verfügbar. Bei Abreißen der Kommunikation (Herzschlagnachricht oder Timeout) wird die Fernbedienung ebenfalls deaktiviert. Schließlich wird durch die Authentisierung des Computers 54 beim Arbeitsfahrzeug 10 und den passiven Modus 514 verhindert, dass der Bediener sich z.B. nach einer Pause in der Nähe eines bestimmten Arbeitsfahrzeugs befindet und eine Geräteschnittstelle dieses Arbeitsfahrzeugs steuern möchte, während sein Computer 54 jedoch mit einem anderen Arbeitsfahrzeug verbunden ist.

## Patentansprüche

1. Landwirtschaftliches Arbeitsfahrzeug (10) mit einer Geräteschnittstelle und einer Anordnung zur fernbedienten Kontrolle der Geräteschnittstelle, wobei die Anordnung zur fernbedienten Kontrolle der Geräteschnittstelle folgendes umfasst:
eine Steuereinheit (46, 68, 70) des Arbeitsfahrzeugs (50), die mit einem fremdkraftbetätigten Aktor (26, 28, 42) zur Verstellung der Position der Geräteschnittstelle in kontrollierender Verbindung steht, und
einen tragbaren Computer (54) mit Eingabemitteln und einem Prozessor (56), der mit der Steuereinheit (46, 68, 70) in drahtloser Kommunikationsverbindung steht und auf dem eine Software heruntergeladen ist, welche eine Kontrolle des Aktors (26, 28, 42) mittels der Eingabemittel über den Prozessor (56) und die Steuereinheit (46, 68, 70) ermöglicht,
**dadurch gekennzeichnet, dass** eine Fernbedienung der Geräteschnittstelle des Arbeitsfahrzeugs (10) nur möglich ist, wenn zumindest eine der folgenden Bedingungen erfüllt ist: der Computer (54) und das Arbeitsfahrzeug (10) sind durch Austausch eines Paarungscodes gepaart, der Computer (54) und das Arbeitsfahrzeug (10) sind durch Nahfeldkommunikation und/oder Eingaben durch den Bediener in den Computer (54) und/oder ein arbeitsfahrzeugseitiges Terminal (76) erfolgreich untereinander autorisiert, das Arbeitsfahrzeug (10) befindet sich im Stillstand, das Arbeitsfahrzeug (54) hat in vorgegebener Zeit eine Herzschlagnachricht vom Computer (54) erhalten, und es liegt kein genereller Zeitablauf (Timeout) der Kommunikation zwischen Computer (54) und Arbeitsfahrzeug (10) vor,
und dass der Computer (54) und das Arbeitsfahrzeug (10) zwischen einem ersten Zustand (300), in den eine Fernbedienung nicht möglich ist, und einem zweiten Zustand (302), in dem eine Fernbedienung möglich ist, umgeschaltet werden können und ein Übergang vom ersten Zustand (300) in einen Modus (510, 512) des zweiten Zustands (302), in dem durch Betätigen einer berührungsempfindlichen Anzeigeeinrichtung (60) oder Tasten des Computers (54) eine Fernbedienung der Geräteschnittstelle möglich ist, nur im Stillstand des Arbeitsfahrzeugs (10) durch Austausch des Paarungscodes und ggf. Autorisierung und nach Auswahl der zu kontrollierenden Geräteschnittstelle möglich ist, während nach einem generellen Zeitablauf und/oder einer fehlenden Herzschlagnachricht und/oder einem sich bewegenden Arbeitsfahrzeug (10) selbsttätig ein Übergang in den ersten Zustand (300) erfolgt, aus dem nur durch einen erneuten Austausch eines Paarungscodes und ggf. Autorisierung und nach erneuter Auswahl der zu kontrollierenden Geräteschnittstelle ein Übergang in den besagten Modus (510, 512) des zweiten Zustands (302) möglich ist.

2. Arbeitsfahrzeug (10) nach Anspruch 1, wobei die Geräteschnittstelle eine vordere Dreipunktkupplung (36) ist und der Aktor (42) zum Anheben und Absenken unterer Lenker (40) und/oder zur Längenverstellung eines oberen Lenkers (38) und/oder zum Öffnen und Schließen einer Verriegelung des Geräts (44) an einem Lenker (38, 40) und/oder zum Umschalten zwischen einer einfachen und einer doppelten Wirkung des Aktors (42) dient und/oder wobei die Geräteschnittstelle eine hintere Dreipunktkupplung (20) ist und der Aktor (26, 28) zum Anheben und Absenken unterer Lenker (22) und/oder zur Längenverstellung eines oberen Lenkers (24) und/oder zum Verlängern und Verkürzen hydraulischer Stabilisatoren und/oder zum Öffnen und Schließen einer Verriegelung des Geräts an einem Lenker (22, 24) dient und/oder wobei die Geräteschnittstelle eine Gerätekupplung, insbesondere eine Anhängerkupplung ist, und der Aktor zum Öffnen und Schließen der Gerätekupplung und/oder zur Verstellung der Gerätekupplung in Vorwärtsrichtung und/oder vertikaler Richtung dient, und/oder die Geräteschnittstelle eine Zapfwelle (34) ist und der Aktor zum Ein- und Ausschalten der Zapfwelle (34) dient.

3. Arbeitsfahrzeug (10) nach einem der vorhergehenden Anspruch 1 oder 2, wobei der tragbare Computer (54) ein Tablet-Computer oder Smartphone ist und/oder drahtlos, insbesondere über eine Funkverbindung, mit der Steuereinrichtung (46, 68, 70) kommuniziert, insbesondere nach einem netzwerkprotokollbasierten Standard oder einem Standard für Mobiltelefonie.

4. Arbeitsfahrzeug (10) nach einem der Ansprüche 1 bis 3, wobei der Computer (54) aus einem Modus (510, 512), in dem durch Betätigen einer berührungsempfindlichen Anzeigeeinrichtung (60) oder Tasten des Computers (54) eine Fernbedienung der Geräteschnittstelle möglich ist, durch eine Sperrung seiner Anzeigeeinrichtung (60) oder Ansprechen eines Näherungsschalters in einen passiven Modus (514) gelangt, in dem eine Fernbedienung nicht möglich ist, und aus dem passiven Zustand eine direkte Rückkehr in einen Modus (510, 512), in dem durch Betätigen einer berührungsempfindlichen Anzeigeeinrichtung (60) oder Tasten des Computers (54) eine Fernbedienung der Geräteschnittstelle möglich ist, ohne neue Paarung und/oder Authentisierung nur nach einer Bestätigungseingabe möglich ist, in welcher der Bediener bestätigt, das zuvor kontrollierte Arbeitsfahrzeug (10) weiterhin kontrollieren zu wollen.

5. Arbeitsfahrzeug (10) nach einem der Ansprüche 1 bis 4, wobei ein Warnlicht des Arbeitsfahrzeugs (10) aktiviert wird, wenn sich der Computer (54) in einem Modus (510, 512) befindet, in dem durch Betätigen einer berührungsempfindlichen Anzeigeeinrichtung (60) oder Tasten des Computers (54) eine Fernbedienung der Geräteschnittstelle möglich ist und/oder ein Vibrationssignal des Computers (54) aktiviert wird, wenn in dem besagten Modus (510, 512) eine Aktivierung der berührungsempfindlichen Anzeigeeinrichtung (60) oder Tasten des Computers (54) stattfindet.

## Claims

1. Agricultural work vehicle (10) having a device interface and an assembly for the remote control of the device interface, wherein the assembly for the remote control of the device interface comprises the following:
a control unit (46, 68, 70) of the work vehicle (50), which control unit (46, 68, 70) has a controlling connection to an extraneous-force-activated actuator (26, 28, 42) for adjusting the position of the device interface, and
a portable computer (54) with input means and a processor (56) which has a wireless communication connection to the control unit (46, 68, 70) and into which software is downloaded which permits control of the actuator (26, 28, 42) by means of the input means via the processor (56) and the control unit (46, 68, 70),
**characterized in that** the remote control of the device interface of the work vehicle (10) is possible only if at least one of the following conditions is satisfied: the computer (54) and the work vehicle (10) are paired by exchanging a pairing code, the computer (54) and the work vehicle (10) are successfully authorized with respect to one another by close-range communication and/or inputs by the operator into the computer (54) and/or a work-vehicle-side terminal (76), the work vehicle (10) is in the stationary state, the work vehicle (54) has received a heartbeat message from the computer (54) in a prescribed time, and there is no general time sequence (timeout) of the communication between computer (54) and work vehicle (10),
and **in that** the computer (54) and the work vehicle (10) can be switched between a first state (300), in which remote control is not possible, and a second state (302) in which remote control is possible, and a changeover from the first state (300) into a mode (510, 512) of the second state (302) in which remote control of the device interface is possible by activating a touch-sensitive display apparatus (60) or keys of the computer (54), is possible only in the stationary state of the work vehicle (10) by exchanging the pair code and, if appropriate, authorization and after selection of the device interface to be controlled, while, after a general time sequence and/or a failure of a heartbeat message to occur and/or a moving work vehicle (10), there is an automatic changeover into the first state (300) from which a changeover into said mode (510, 512) of the second state (302) is possible only through a renewed exchange of a pairing code and, if appropriate, authorization and after renewed selection of the device interface to be controlled.

2. Work vehicle (10) according to Claim 1, wherein the device interface is a front three-point hitch (36), and the actuator (42) serves to raise and lower lower links (40) and/or for longitudinally adjusting an upper link (38) and/or for opening and closing a lock of the device (44) on a link (38, 40) and/or for switching over between a single effect and a double effect of the actuator (42), and/or wherein the device interface is a rear three-point hitch (20), and the actuator (26, 28) serves to raise and lower the lower links (22) and/or to longitudinally adjust an upper link (24) and/or to lengthen and shorten hydraulic stabilizers and/or to open and close a lock of the device on a link (22, 24), and/or wherein the device interface is a device coupling, in particular a trailer hitch, and the actuator serves to open and close the device coupling and/or to adjust the device coupling in the forward direction and/or vertical direction, and/or the device interface is a power takeoff (34), and the actuator serves to switch the power takeoff (34) on and off.

3. Work vehicle (10) according to one of the preceding Claim 1 and 2, wherein the portable computer (54) is a tablet computer or a smartphone and/or communicates in a wireless fashion, in particular via a radio link, with the control apparatus (46, 68, 70), in particular according to a network-protocol-based standard or a mobile telephone standard.

4. Work vehicle (10) according to one of Claims 1 to 3, wherein the computer (54) changes from a mode (510, 512), in which remote control of the device interface is possible by activating a touch-sensitive display apparatus (60) or keys of the computer (54), by locking its display apparatus (60) or triggering a proximity switch, into a passive mode (514) in which remote control is not possible, and from the passive state a direct return into a mode (510, 512), in which remote control of the device interface is possible by activating a touch-sensitive display apparatus (60) or keys of the computer (54), is possible without new pairing and/or authentication only after a confirmation input in which the operator confirms that he wishes to continue to control the previously controlled work vehicle (10).

5. Work vehicle (10) according to one of Claims 1 to 4, wherein a warning light of the work vehicle (10) is activated if the computer (54) is in a mode (510, 512) in which remote control of the device interface is possible by activating a touch-sensitive display apparatus (60) or keys of the computer (54), and/or a vibration signal of the computer (54) is activated if the touch-sensitive display apparatus (60) or keys of the computer (54) is/are activated in said mode (510, 512).

## Revendications

1. Engin agricole (10) comportant une interface d'outil et un système de contrôle à distance de l'interface d'outil, dans lequel le système de contrôle à distance de l'interface d'outil comprend :
une unité de commande (46, 68, 70) de l'engin (50), qui est en liaison de contrôle avec un actionneur actionné par force externe (26, 28, 42) pour régler la position de l'interface d'outil, et
un ordinateur portable (54) comportant des moyens de saisie et un processeur (56) qui est liaison de communication sans fil avec l'unité de commande (46, 68, 70) et sur lequel est téléchargé un logiciel qui permet un contrôle de l'actionneur (26, 28, 42) à l'aide des moyens de saisie par l'intermédiaire du processeur (56) et de l'unité de commande (46, 68, 70),
**caractérisé en ce qu'**une commande à distance de l'interface d'outil de l'engin (10) n'est possible que si au moins l'une des conditions suivantes est remplie : l'ordinateur (54) et l'engin (10) sont jumelés par échange d'un code de jumelage, l'ordinateur (54) et l'engin (10) sont autorisés l'un vis-à-vis de l'autre avec succès par une communication en champ proche et/ou par des saisies effectuées par l'opérateur sur l'ordinateur (54) et/ou sur un terminal (76) côté engin, l'engin (10) est à l'arrêt, l'engin (54) a reçu un message de battement cardiaque de l'ordinateur (54) en un temps prédéterminé, et il ne se produit pas de délai d'attente général (timeout) de la communication entre l'ordinateur (54) et l'engin (10),
et **en ce que** l'ordinateur (54) et l'engin (10) peuvent être amenés à basculer entre un premier état (300) dans lequel la commande à distance n'est pas possible, et un second état (302) dans lequel la commande à distance est possible, et un passage du premier état (300) à un mode (510, 512) du second état (302), dans lequel une commande à distance de l'interface d'outil est possible par actionnement d'un dispositif d'affichage tactile (60) ou de touches de l'ordinateur (54), n'est possible que lorsque l'engin (10) est à l'arrêt par échange du code de jumelage et, le cas échéant, de l'autorisation et après sélection de l'interface d'outil à contrôler, alors qu'après un délai d'attente général et/ou qu'en l'absence d'un message de battement cardiaque et/ou que lorsque l'engin (10) se déplace, un passage dans le premier état (300) est effectué automatiquement, à partir duquel il n'est possible de passer dans ledit mode (510, 512) du second état (302) que par un nouvel échange d'un code de jumelage et, le cas échéant, par une nouvelle autorisation et après une nouvelle sélection de l'interface d'outil à contrôler.

2. Engin (10) selon la revendication 1, dans lequel l'interface d'outil est un attelage à trois points avant (36), et l'actionneur (42) sert à relever et abaisser des bras inférieurs (40) et/ou à régler la longueur d'un bras supérieur (38) et/ou à ouvrir et fermer un verrou de l'outil (44) au niveau d'un bras (38, 40) et/ou à effectuer un basculement entre une action unique ou une double action de l'actionneur (42) et/ou dans lequel l'interface d'outil est un attelage à trois points arrière (20) et l'actionneur (26, 28) sert à relever et abaisser des bras inférieurs (22) et/ou à régler la longueur d'un bras supérieur (24) et/ou à étendre et raccourcir des stabilisateurs hydrauliques et/ou à ouvrir et fermer un verrou de l'outil sur un bras (22, 24) et/ou dans lequel l'interface d'outil est un attelage d'outil, en particulier un attelage de remorque, et l'actionneur sert à ouvrir et fermer l'attelage d'outil et/ou à régler l'attelage d'outil vers l'avant et/ou dans la direction verticale et/ou l'interface d'outil est un arbre de prise de force (34) et l'actionneur sert à activer et désactiver l'arbre de prise de force (34).

3. Engin (10) selon l'une des revendications 1 ou 2 précédentes, dans lequel l'ordinateur portable (54) est un ordinateur tablette ou un téléphone intelligent et/ou communique sans fil, en particulier par liaison radio, avec le dispositif de commande (46, 68, 70), en particulier selon une norme basée sur un protocole réseau ou une norme de téléphonie mobile.

4. Engin (10) selon l'une des revendications 1 à 3, dans lequel l'ordinateur (54) passe d'un mode (510, 512), dans lequel la commande à distance de l'interface d'outil est possible par actionnement d'un dispositif d'affichage tactile (60) ou de touches de l'ordinateur (54), à un mode passif (514), dans lequel la commande à distance est impossible, par désactivation de son dispositif d'affichage (60) ou en réponse à un commutateur de proximité, et un retour direct de l'état passif à un mode (510, 512) dans lequel la commande à distance de l'interface d'outil est possible, sans nouveau jumelage et/ou sans nouvelle authentification, par actionnement d'un dispositif d'affichage (60) ou de touches de l'ordinateur (54), n'est possible qu'après une saisie de confirmation lors de laquelle l'opérateur confirme vouloir continuer à contrôler l'engin (10) précédemment contrôlé.

5. Engin (10) selon l'une des revendications 1 à 4, dans lequel un témoin lumineux d'avertissement de l'engin (10) est activé lorsque l'ordinateur (54) se trouve dans un mode (510, 512) dans lequel une commande à distance de l'interface d'outil est possible par actionnement d'un dispositif d'affichage tactile (60) ou de touches de l'ordinateur (54) et/ou un signal de vibration de l'ordinateur (54) est activé lorsque, dans ledit mode (510, 512), une activation du dispositif d'affichage tactile (60) ou de touches de l'ordinateur (54) se produit.
